# EUROPEAN PATENT SPECIFICATION

(11) **EP 1 561 326 B1**
(45) Date of publication and mention of the grant of the patent: **05.01.2011**
(21) Application number: 03770194.3
(22) Date of filing: 04.11.2003
(51) Int. Cl.: H04L 29/06, H04L 12/56, H04L 29/12

(54) **APPARATUS AND METHOD FOR NEGOTIATING NETWORK PARAMETERS**
VORRICHTUNG UND VERFAHREN ZUM AUSHANDELN VON NETZWERKPARAMETERN
APPAREIL ET PROCEDE DE NEGOCIATION DE PARAMETRES DE RESEAU

(30) Priority: 05.11.2002 SE 0203248
(43) Date of publication of application: 10.08.2005
(73) Proprietor: Google Inc., Mountain View, CA 94043 (US)
(72) Inventor: PARNES, Peter, S-977 54 LULEÅ (SE); PERSSON, Mikael, S-977 52 LULEÅ (SE); ÅGREN, Claes, S-975 96 LULEÅ (SE)
(74) Representative: Herbjørnsen, Rut
(86) International application number: PCT/SE2003/001697
(87) International publication number: WO 2004/043040

(56) References cited:
- WO-A1-01/30036
- WO-A1-02/03217
- US-A1- 2002 114 322
- US-A1- 2002 122 416

## Description

### Technical field of the invention

The present invention relates to an apparatus and method for negotiating network parameters for distribution of media between a client terminal and a server. More in detail the invention relates to means and methods for traversing a firewall which is utilising translation of network addresses.

### Background of the invention

Today, so-called firewalls, shields or other types of protective security arrangements are connected to almost every computer system and communication network. Such security arrangements are necessary for preventing from undesired intrusion into the computer system or network. An attack from outside with the purpose of destruction, or a computer virus that manages to pass security arrangements and reach the interior of a computer system may cause serious damage to it. The damage applies not only the internal computer network or a residential computer system, but also to various electronic equipment related to it. As an alternative to an ordinary firewall, the user of a client terminal in a network may have a so-called network address translator, NAT, between his part of the network and the external network. The arrangement provides an additional obstacle for external users who want to obtain information about the IP-addresses that are present behind the NAT arrangement and in addition to that, the arrangement provides the user with a sufficient number of IP-addresses within his internal network.

A firewall can do address translation to protect internally used IP-numbers from being seen outside of the firewall. This translation changes the network IP information relating to port numbers assigned for the media flow and thus re-directs the media transport. The IP information is used by servers that manage e-meetings or other media distribution services to identify client terminals.

One solution to the problem of how to enable traffic to and from client terminals and servers with an intermediate firewall or other protective arrangement is to insert a specific media proxy server in association with the communication server. However, this is both complicated and costly and hence, there is a need for an improved solution to the problem.

US 2002/0122416 A1 discloses a solution wherein a directory server is introduced to enable traffic to and from client terminals with an intermediate network address translation function. WO020321 A1 discloses a system that uses a separate application server that set up a communication link. US 2002/9114322 discloses a system that uses an intermediate proxy server. WO 0130036 A1 discloses an arrangement for a communications unit, especially for H.323 proxies, whereby a network adapter (NA) (2, 4) is provided.

### Summary of the invention

It is therefore an object of the present invention to alleviate the previously mentioned shortcomings of prior art associated with group communication services and provide a generally applicable solution. This is accomplished by an apparatus and a method according to claims 1 and 5.

By means of the present invention, negotiation is carried out between a server and a client terminal to propagate the network IP information required for real-time media communication. This is done by direct communication between the client terminal and server using a computer communication protocol connection for transmission of network information in cases when the network address translation is not required. The client terminal and intermediate communication server are adapted to exchange information about network parameters in order to be able to identify the mapping structure between the client's terminal view of the network parameters and the server view after that the data has passed the network address translation unit. The mapping information is subsequently used for identifying the client terminal at the server as well as informing the server about where to send the real-time media for it to reach the receiving client.

### Brief description of the drawings

The features, objects, and further advantages of this invention will become apparent by reading this description in conjunction with the accompanying drawings, in which like reference numerals refer to like elements and in which:
Fig 1 illustrates a schematic overview of the means required for transmitting a media stream of data according to the present invention.
Fig 2 is a schematic illustration of the mapping of network addresses when transmitting a media stream of data according to the present invention.

### Detailed description

The following description is of the best mode presently contemplated for practising the invention. The description is not to be taken in a limiting sense, but is made merely for the purpose of describing the general principles of the invention. The scope of the invention should be ascertained with reference to the issued claims.

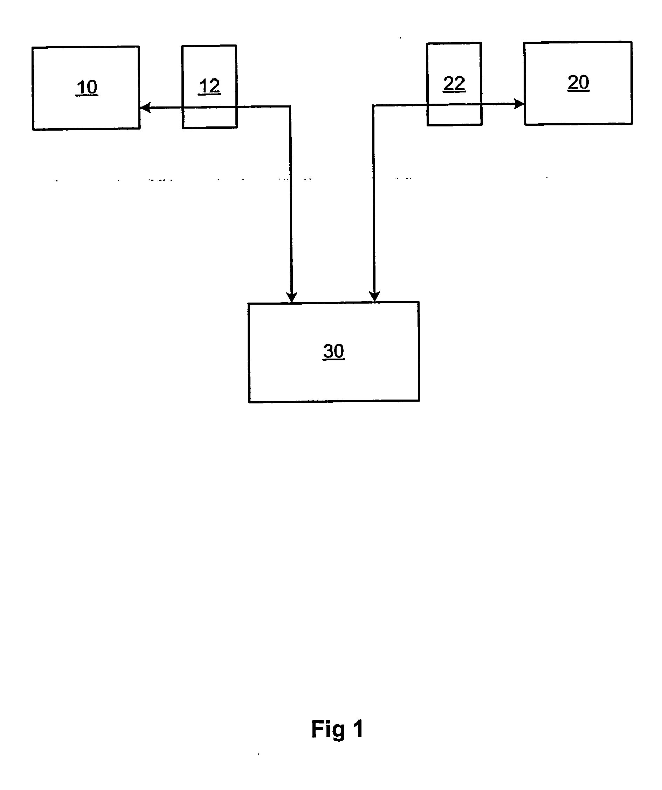

With reference to Fig 1, a sending client terminal 10 is connected to the receiving client terminal 20. The connection is preferably made between the sending client terminal and the receiving client terminal via an intermediate communication server 30, which is adapted to direct or forward communication data from any sending communication terminal to another receiving communication terminal. A protective means 12, 22 is arranged in in-between each of the client terminals and the data distributing computer network for protecting the client terminals from harmful intrusion, such as computer viruses or other damaging and network distributed attacks to which the client terminal can be exposed. One kind of protective means is a software-based firewall arrangement or another computer protection means such as a virus shield. The sending and receiving client terminals may comprise any electronic equipment used for communication purposes, such as a personal computer or other type of mobile communication terminal including palmtops, mobile telephones, consoles and electronic organising tools.

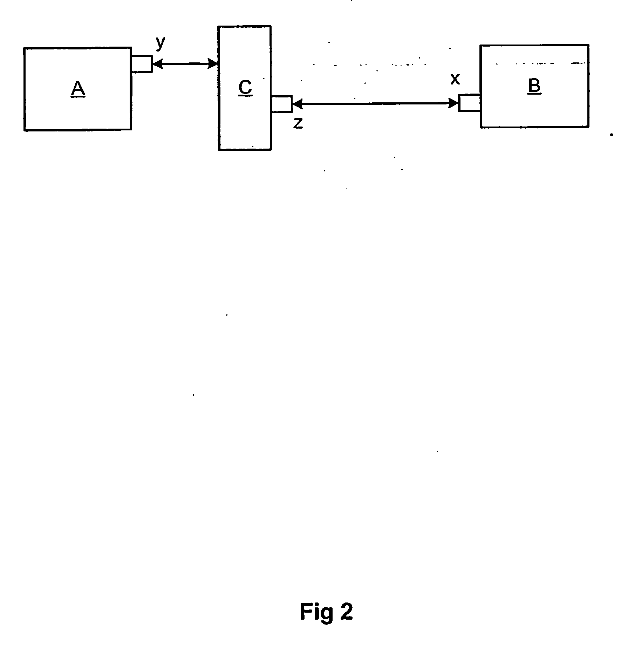

In accordance with one embodiment, which is depicted in Fig 2, the general function of a network address translator is the following: a client terminal A is to establish communication with another client terminal B. Client terminal A is protected by a firewall and/or a network address translator C. Client terminal B pays attention to signals that are input on its port number "x". When executing the signalling, client terminal A is about to transmit a signal from port number "y" to client B's port number "x". However, the firewall and/or network address translator arrangement C restrains this packet and re-transmits it from a port number "z" of the protective means C to port number "x" of the client terminal B. Now, there has been established a state in the firewall and/or network address translator C with a mapping of a port on the external side from port "z" of the protective means C to port "y" of client terminal A, i.e. client terminal B now transmits data to port "z" and the firewall and/or network address translator translates this to port "y" of client terminal A. In order to maintain the allow return mode, client terminal A must continuously transmit information to client terminal B through the firewall and/or network address translation arrangement C.

More in detail, and also with reference to Fig 2, the function of a certain network address translator arrangement in accordance with the present invention is as follows: the first step is client terminal A and client terminal B exchanging a secret piece of information, a so-called key, which may be a large and randomly chosen number treated as secret information, Cr. This is done via a mechanism, such as encrypted and therefore secure HTTP (HTTPS). For clarity reasons although known by the skilled person, HTTP means hypertext transfer protocol and this protocol is the currently used standardised format for transmitting web information. This secret information is transmitted over TCP in a secure transport mode so as to make sure that the information reaches its intended recipient. Next step for client terminal A is to initiate communication with client terminal B via port "x" of client terminal B. Client terminal A transmits data from port "y" via the network translation arrangement C. The arrangement C forwards data to client terminal via its port "z". Data is now flowing from client terminal B to client terminal A by means of client terminal B transmitting data to port "z" of the network translation arrangement C which in its turn translates this data to port "y" of client terminal A. At this stage of the transmission, client terminal B transmits a request to client terminal A to encrypt an arbitrary word "whatever" by utilising its secret key Cr, which is the same as previously mentioned, and then transmits the encrypted arbitrary word "whatever" to client terminal B. Client terminal B, which is also in possession of the secret key Cr does the same and provided the results of the two encrypted words are equal, transmitted information in the form of data traffic from client terminal A via the network translation arrangement C to client terminal B is acknowledged as being correct. That means further data traffic can be exchanged between client terminal A and client terminal B.

By applying the above described function on the apparatus of Fig 1, the more detailed description therefore yields the following interpretation of the illustration: Two communication client terminals 10, 20 which are both situated behind network translation arrangements 12, 22. Communication between the two client terminals must be established via a third party, which may include any kind of communication means 30, such for example a communication server or a portal. The first steps for establishing a functional communication channel between the communication client terminals 10 and 20 are carried out in parallel between the individual clients 10 and 20 respectively, and on the other side the communication means 30. As soon as the communication channels 10-30 and 20-30 respectively are established, client terminals 10 and 20 can communicate with each other by transmitting data via the communication means 30.

The above described procedure and function has similarities with the cryptologically known method of challenge response. Moreover, the arbitrary word "whatever" consists of entirely arbitrary symbols which does not necessarily have a meaning or is a known word.

A protective means, such as a firewall, is often arranged in a way that it allows traffic to enter into a protected zone only on condition that corresponding traffic has been transmitted out of that protected zone. For a situation when the communication channel has not been utilised for a period of time, the state of a firewall changes from a data permeable open mode to a locked mode. Other kinds of features associated with firewalls are the described network address translation.

Over the data connection is distributed any type of media information, such as streaming video, IP-telephony communication data or synchronous real-time communication data.

In accordance with the present invention, software is developed in parallel with the method of transmitting and acknowledging a media stream of data. The software resides in a memory associated with the means for transmitting and acknowledging according to Fig 1. The software is designed for instructing the hardware to carry out the sequential method steps previously described in this document with particular reference to Fig 2 and the method claims.

## Claims

1. Apparatus for real-time data communication comprising a sending client terminal (10) and at least one receiving client terminal (20), the client terminals being provided with protective means (12, 22), the real-time data communication transmitted via an intermediate distribution server (30), the protective means (12, 22) being provided with a network translation unit (not shown) for mapping one internally accessible network destination address with a corresponding externally accessible network destination address,
**characterised in that**
the sending client terminal (10) and the intermediate distribution server (30) are adapted to exchange information between one another about the current mapping of destination addresses for the server to access the receiving client terminal (20) with real-time data communication;
the sending and receiving client terminals are arranged to exchange a secret piece of information, such as a so-called key, between them selves,
the receiving client terminal is arranged to transmit a request requesting the sending client terminal to encrypt an arbitrary sequence by using the secret piece of information,
the sending and receiving client terminals are arranged to encrypt the arbitrary sequence by using the exchanged identical secret piece of information,
the sending client terminal is arranged to return the encrypted arbitrary sequence to the receiving client terminal, and
the receiving client terminal is arranged to compare the results of the communication terminals encrypted sequences so as to acknowledge further transmission of real-time data communication between the client terminals.

2. Apparatus for real-time data communication according to claim 1, **characterised in that**
the protective means is a firewall arrangement.

3. Apparatus for real-time data communication according to claim 1 or 2, **characterised in that**
the protective means is a virus shield arrangement.

4. Apparatus for real-time data communication according to claims 1-3, **characterised in that**
real-time data communication includes data from streaming video, IP-telephony or synchronous communication.

5. Method for real-time data communication comprising a sending client terminal (10) and at least one receiving client terminal (20), the client terminals being provided with protective means (12, 22), the real-time data communication transmitted via an intermediate distribution server (30), the protective means (12, 22) being provided with a network translation unit (not shown) for mapping one internally accessible network destination address with a corresponding externally accessible network destination address,
**characterised by**
exchanging information between the sending client terminal (10) and the intermediate distribution server (30) about the current mapping of destination addresses for the server to access the receiving client terminal (20) with real-time data communication, and
exchanging a secret piece of information, such as a so-called key, between the sending and receiving client terminals,
the receiving client terminal transmitting requesting the sending client terminal to encrypt an arbitrary sequence by using the secret piece of information,
the sending and receiving client terminals encrypting the arbitrary sequence by using the exchanged identical secret piece of information,
the sending client terminal returns the encrypted arbitrary sequence to the receiving client terminal, and
the receiving client terminal compares the results of the communication terminals encrypted sequences so as to acknowledge further transmission of real-time data communication between the client terminals.

6. Method for real-time data communication according to claim 5, further **characterised by**
exchanging the secret piece of information, the so-called key, in a secure transport mode such as secure HTTP (hypertext transfer protocol) via TCP (transmission control protocol).

7. Computer program product for real-time data communication comprising a sending client terminal (10) and at least one receiving client terminal (20), the client terminals being provided with protective means (12, 22), the real-time data communication transmitted via an intermediate distribution server (30), the protective means (12, 22) being provided with a network translation unit (not shown) for mapping one internally accessible network destination address with a corresponding externally accessible network destination address,
**characterised in that**
the computer program product is adapted for carrying out the method steps of claim 5-6.

## Patentansprüche

1. Vorrichtung für Echtzeitdatenkommunikation, umfassend ein sendendes Client-Endgerät (10) und mindestens ein empfangenes Client-Endgerät (20), wobei die Client-Endgeräte versehen sind mit Schutzmitteln (12, 22), die Echtzeitdatenkommunikation über einen Zwischenverteilungsserver (30) übertragen wird, die Schutzmittel (12, 22) mit einer Netzumsetzungseinheit (nicht gezeigt) versehen sind zum Abbilden einer intern zugänglichen Netzzieladresse auf eine entsprechende extern zugängliche Netzzieladresse,
**dadurch gekennzeichnet, dass**
das sendende Client-Endgerät (10) und der Zwischenverteilungsserver (30) eingerichtet sind, um Information über die momentane Abbildung von Zieladressen untereinander auszutauschen, für den Server, um auf das empfangende Client-Endgerät (20) mit Echtzeitdatenkommunikation zuzugreifen;
die sendenden und empfangenden Client-Endgeräte eingerichtet sind, um ein geheimes Informationsstück auszutauschen, wie ein sogenannter Schlüssel, zwischen sich selbst,
das empfangende Client-Endgerät eingerichtet ist, um eine Anfrage zu übertragen, die das sendende Client-Endgerät anfragt, eine beliebige Sequenz unter Verwendung des geheimen Informationsstücks zu verschlüsseln,
die sendenden und empfangenden Client-Endgeräte eingerichtet sind, um die beliebige Sequenz zu verschlüsseln unter Verwendung des ausgetauschten, identischen, geheimen Informationsstücks,
das sendende Client-Endgerät eingerichtet ist, um die verschlüsselte beliebige Sequenz zu dem empfangenden Client-Endgerät zurückzusenden, und
das empfangende Client-Endgerät eingerichtet ist, um die Ergebnisse der verschlüsselten Sequenzen der Kommunikationsendgeräte zu vergleichen, um weitere Übertragung von Echtzeitdatenkommunikation zwischen den Client-Endgeräten zu bestätigen.

2. Vorrichtung für Echtzeitdatenkommunikation nach Anspruch 1, **dadurch gekennzeichnet, dass**
das Schutzmittel eine Firewall-Anordnung ist.

3. Vorrichtung für Echtzeitdatenkommunikation nach Anspruch 1 oder 2, **dadurch gekennzeichnet, dass**
das Schutzmittel eine Virenschild-Anordnung ist.

4. Vorrichtung für Echtzeitdatenkommunikation nach Anspruch 1 bis 3, **dadurch gekennzeichnet, dass**
Echtzeitdatenkommunikation Daten beinhaltet von Streaming-Video, IP-Telefonie oder synchroner Kommunikation.

5. Verfahren für EchtzeitdatenKommunikation, umfassend ein sendendes Client-Endgerät und mindestens ein empfangenes Client-Endgerät (20), wobei die Client-Endgeräte mit Schutzmittel (12, 22) versehen sind, die
Echtzeitdatenkommunikation über einen Zwischenverteilungsserver (30) übertragen wird, die Schutzmittel (12, 22) mit einer Netzumsetzungseinheit (nicht gezeigt) versehen sind zum Abbilden einer intern zugänglichen Netzzieladresse auf eine entsprechende extern zugängliche Netzzieladresse,
**gekennzeichnet durch**
Austauschen von Information zwischen dem sendenden Client-Endgerät (10) und dem Zwischenverteilungsserver (30) über die momentane Abbildung von Zieladressen, für den Server, um auf das empfangende Client-Endgerät (20) mit Echtzeitdatenkommunikation zuzugreifen, und
Austauschen eines geheimen Informationsstücks, wie ein sogenannter Schlüssel, zwischen den sendenden und empfangenden Client-Endgeräten,
das empfangende Client-Endgerät überträgt, wobei es das sendende Client-Endgerät anfragt eine beliebige Sequenz unter Verwendung des geheimen Informationsstücks zu verschlüsseln,
die sendenden und empfangenden Client-Endgeräte verschlüsseln die beliebige Sequenz unter Verwendung des ausgetauschten, identischen, geheimen Informationsstücks,
das sendende Client-Endgerät sendet die verschlüsselte, beliebige Sequenz zu dem empfangenden Client-Endgerät zurück, und
das empfangende Client-Endgerät vergleicht die Ergebnisse der verschlüsselten Sequenzen der Kommunikationsendgeräte, um weitere Übertragung von Echtzeitdatenkommunikation zwischen den Client-Endgeräten zu bestätigen.

6. Verfahren für Echtzeitdatenkommunikation nach Anspruch 5, ferner **gekennzeichnet durch**
Austauschen des geheimen Informationsstücks, des sogenannten Schlüssels, in einem sicheren Übertragungsmodus wie sicherem HTTP (Hypertext-Übertragungsprotokoll) über TCP (Übertragungssteuerungsprotokoll).

7. Computerprogrammprodukt für Echtzeitdatenkommunikation, umfassend ein sendendes Client-Endgerät (10) und mindestens ein empfangendes Client-Endgerät (20), wobei die Client-Endgeräte mit Schutzmitteln (12, 22) versehen sind, die Echtzeitdatenkommunikation über einen Zwischenverteilungsserver (30) übertragen wird, die Schutzmittel (12, 22) mit einer Netzumsetzungseinheit (nicht gezeigt) versehen sind zum Abbilden einer intern zugänglichen Netzzieladresse auf eine entsprechende extern zugängliche Netzzieladresse,
**dadurch gekennzeichnet, dass**
das Computerprogrammprodukt eingerichtet ist, um die Verfahrensschritte von Anspruch 5-6 auszuführen.

## Revendications

1. Appareil pour une communication de données en temps réel comprenant un terminal client d'envoi (10) et au moins un terminal client de réception (20), les terminaux de client étant pourvus de moyens de protection (12, 22), la communication de données en temps réel étant transmise par l'intermédiaire d'un serveur de distribution intermédiaire (30), les moyens de protection (12, 22) étant pourvus d'une unité de translation de réseau (non représentée) servant à mapper une adresse de destination de réseau accessible intérieurement avec une adresse de destination de réseau accessible extérieurement correspondante,
**caractérisé en ce que**
le terminal client d'envoi (10) et le serveur de distribution intermédiaire (30) sont adaptés pour échanger des informations entre eux concernant le mappage actuel d'adresses de destination pour que le serveur accède au terminal client de réception (20) par une communication de données en temps réel;
les terminaux de client d'envoi et de réception sont agencés de manière à s'échanger une information secrète, telle qu'une ainsi-nommée clé,
le terminal client de réception est agencé pour transmettre une demande demandant au terminal client d'envoi de crypter une séquence arbitraire en utilisant l'information secrète,
les terminaux de client d'envoi et de réception sont agencés pour crypter la séquence arbitraire en utilisant l'information secrète identique échangée,
le terminal client d'envoi est agencé pour renvoyer la séquence arbitraire cryptée au terminal client de réception, et
le terminal client de réception est agencé pour comparer les résultats des séquences cryptées des terminaux de communication de manière à accuser exécution d'une autre transmission de communication de données en temps réel entre les terminaux de client.

2. Appareil pour une communication de données en temps réel selon la revendication 1, **caractérisé en ce que**
les moyens de protection consistent en un agencement de pare-feu.

3. Appareil pour une communication de données en temps réel selon la revendication 1 ou 2, **caractérisé en ce que**
les moyens de protection consistent en un agencement de protection antivirus.

4. Appareil pour une communication de données en temps réel selon les revendications 1 à 3, **caractérisé en ce que**
une communication de données en temps réel comprend des données provenant d'une vidéo en flux continu, d'une téléphonie IP ou d'une communication synchrone.

5. Procédé pour une communication de données en temps réel comprenant un terminal client d'envoi (10) et au moins un terminal client de réception (20), les terminaux de client étant pourvus de moyens de protection (12, 22), la communication de données en temps réel étant transmise par l'intermédiaire d'un serveur de distribution intermédiaire (30), les moyens de protection (12, 22) étant pourvus d'une unité de translation de réseau (non représentée) servant à mapper une adresse de destination de réseau accessible intérieurement avec une adresse de destination de réseau accessible extérieurement correspondante,
**caractérisé par**
l'échange d'informations entre le terminal client d'envoi (10) et le serveur de distribution intermédiaire (30) concernant le mappage actuel d'adresses de destination pour que le serveur accède au terminal client de réception (20) par une communication de données en temps réel, et
l'échange d'une information secrète, telle qu'une ainsi-nommée clé, entre les terminaux de client d'envoi et de réception,
le terminal client de réception qui transmet une demande pour demander au terminal client d'envoi de crypter une séquence arbitraire en utilisant l'information secrète,
les terminaux de client d'envoi et de réception qui crypte la séquence arbitraire en utilisant l'information secrète identique échangée,
le terminal client d'envoi qui renvoie la séquence arbitraire cryptée au terminal client de réception, et
le terminal client de réception qui compare les résultats des séquences cryptées des terminaux de communication de manière à accuser exécution d'une autre transmission de communication de données en temps réel entre les terminaux de client.

6. Procédé pour une communication de données en temps réel selon la revendication 5, **caractérisé en outre par**
l'échange de l'information secrète, l'ainsi-nommée clé, dans un mode de transport sécurisé tel que HTTP (protocole de transfert hypertexte) sécurisé via TCP (protocole de contrôle de transmission).

7. Produit-programme d'ordinateur pour une communication de données en temps réel comprenant un terminal client d'envoi (10) et au moins un terminal client de réception (20), les terminaux de client étant pourvus de moyens de protection (12, 22), la communication de données en temps réel étant transmise par l'intermédiaire d'un serveur de distribution intermédiaire (30), les moyens de protection (12, 22) étant pourvus d'une unité de translation de réseau (non représentée) pour mapper une adresse de destination de réseau accessible intérieurement avec une adresse de destination de réseau accessible extérieurement correspondante,
**caractérisé en ce que**
le produit-programme d'ordinateur est adapté pour effectuer les étapes de procédé des revendications 5 à 6.
